# EUROPEAN PATENT SPECIFICATION

(11) **EP 3 513 072 B1**
(45) Date of publication and mention of the grant of the patent: **15.04.2026**
(21) Application number: 17765155.1
(22) Date of filing: 07.09.2017
(51) Int. Cl.: F04B 19/00, F04B 43/00, F04B 43/04, F16K 99/00

(54) **MICRO VALVE, FLUID PUMP, AND METHOD OF OPERATING A FLUID PUMP**
MIKROVENTIL, FLÜSSIGKEITSPUMPE SOWIE VERFAHREN ZUM BETRIEB EINER FLÜSSIGKEITSPUMPE
MICRO-VANNE, POMPE À FLUIDE ET PROCÉDÉ D'ACTIONNEMENT DE POMPE À FLUIDE

(30) Priority: 13.09.2016 DE 102016217435
(43) Date of publication of application: 24.07.2019
(73) Proprietor: Albert-Ludwigs-Universität Freiburg, 79098 Freiburg (DE)
(72) Inventor: SHABANIAN, Ardavan, 79110 Freiburg (DE); WOIAS, Peter, 79100 Freiburg (DE); GOLDSCHMIDTBÖING, Frank, 77799 Ortenberg (DE)
(74) Representative: Grünecker Patent- und Rechtsanwälte PartG mbB
(86) International application number: PCT/EP2017/072457
(87) International publication number: WO 2018/050534

(56) References cited:
- DE-B3- 102005 038 483
- US-A- 5 378 120
- US-A1- 2011 168 936

## Description

The present invention relates to a fluid pump for pumping a fluid from an inlet towards an outlet. The present invention further relates to a method of operating such a fluid pump, and to a microvalve that can be used with micropumps.

In particular, the present invention discloses a micro-valve-pump (µVP) device which can be applied to a wide range of applications for fluid dosing, handling and manipulation. The application field of such a device can e.g. be found in the life sciences, as micropump and/or microvalve in a chemical analysis system. Other exemplary applications include pumping ink in highthroughput inkjet printers, feeding lubricants to rotating bearings, or sampling gas for chemical gas analysis. In all application areas the device can be utilized as a high performance valve, to actively open or close a flow or as an extraordinary high flowrate one-directional micropump to pump fluid from input to output.

This invention lies on the field of mechanical reciprocating displacement pumps. A detailed description of the state of the art in this field is found in publication [1]: P. Woias, Micropumps - past, progress and future prospects, Sensors and Actuators B 105, 2005, 28-38 and in publication [2]: D. J. Laser and J. G. Santiago, A review of Micropumps, Journal of Micromechanics and Microengineering 14, 2004, R35-R64.

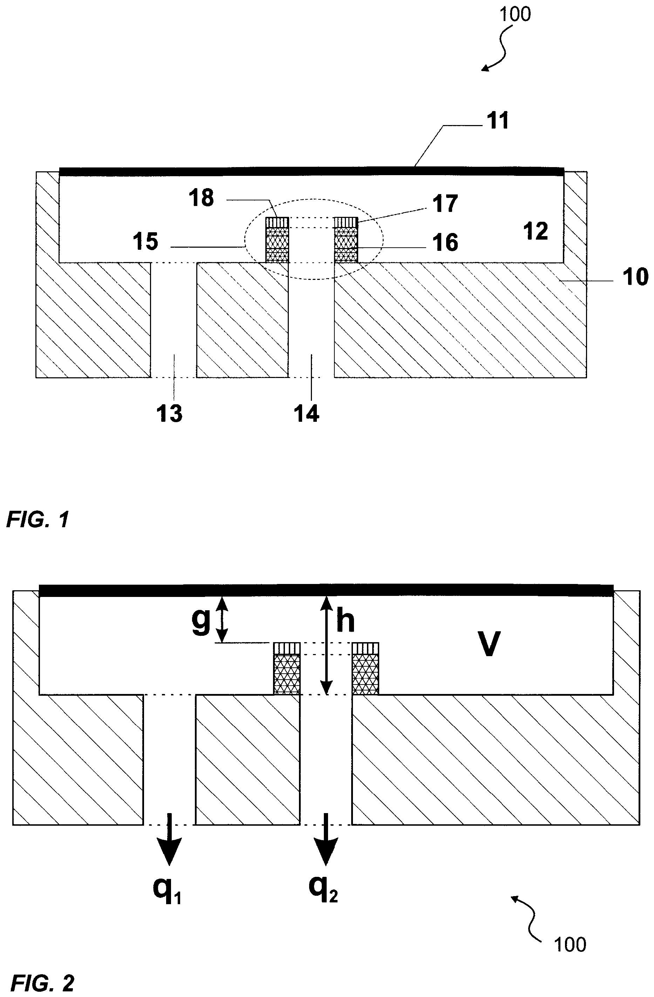

Figure 1 in [1] as well as Figure 2 in [2] show the general, common design principle of the majority of reciprocating micropumps: At least one pump diaphragm is mounted at one side of a pump chamber and displaced in a reciprocating manner to generate an alternating overpressure and underpressure in the pump chamber. Two active or passive valves are located between a fluidic inlet to the pump chamber and a fluidic outlet from the pump chamber, respectively. The timing of the opening and closure of these valves is made in such a way that underpressure in the pump chamber will suck fluid into the pump chamber through the open inlet valve, while the outlet valve is closed. Overpressure in the pump chamber will deliver fluid from the pump chamber to the outlet through the open outlet valve, while the inlet valve is closed.

Actuation principles for this general type of a displacement micropump are manifold as disclosed in [1] and [2], using piezoelectric, electromagnetic, thermopneumatic or electrostatic actuation. In principle, every actuation concept can be applied that allows to displace a diaphragm in a reciprocating manner, no matter whether the respective actuator is integral part of the pump diaphragm or realized as a separate unit mechanically or energetically coupled to the pump diaphragm. Also, valves can be made of a very different shape and design.

As disclosed in documents [1] and [2], three different types of valves are used currently.

Firstly, passive flap valves are opened and closed by the underpressure and overpressure in the pump chamber. Usually these passive valves produce a unidirectional flow between inlet and outlet, as they are unidirectional in their nature. However, it is also shown in publication [3]: R. Zengerle et al., A bidirectional silicon micropump, Sensors and Actuators A50, 1995, 81-86 that dynamic effects can generate a reverse flow from the outlet to the inlet also in micropumps with flap valves. The physical effect behind is a time lag of the pressure-triggered flap movement with respect to the pump diaphragm movement, generated via inertial effects and fluidic damping of the flap movement.

A second type are active valves that are equipped with their own actuation mechanism and opened or closed on demand. Such micropumps are frequently referred as peristaltic micropumps, as they mimic the operation of roller or tubing pumps. They do also allow for a bidirectional flow by appropriate timing of the valve opening and closure with respect to the operation of the pump diaphragm.

A third type are nozzle-diffuser valves. These valves are discriminated from the other two types by the fact that they do not allow for a complete closure. Instead they are built from fluidic channels or orifices with a shape that provides different fluidic resistances for a forward and backward flow. Well-known examples are channels with a conical shape as described in publication [4]: E. Stemme, G. Stemme, A valveless diffuser/nozzle-based fluid pump, Sensors and Actuators A 39, 1993, 159-167.

The micropumps described so far use separated pump diaphragms and valve units as a common feature. However, it has to be mentioned that peristaltic micropumps employing active diaphragm valves will also use the fluid displacement of these diaphragms for fluid propellation. Therefore, these valves take in part the function of a pump diaphragm. This is documented in publication [5]: F. Goldschmidtböing et al., A generic analytical model for micro-diaphragm pumps with active valves, Journal of Micromechanics and Microengineering 15 (4), 2005, 673-683, there in Figure 2.

In any version, however, the reciprocating micropumps described above present several disadvantages of conventional solutions:
The combination of pumping diaphragm, pump chamber and two fluidic valves is leading to relatively complex designs and fabrication technologies, especially, if miniaturization in a micropump is the goal. Also, defect and error sources are increased, as for instance by the blocking of valves with particles, the entrapment of fluid bubbles inside the fluidic system or the failure of a micropump due to the malfunction of only one of the functional parts (fracture of one flap or damage in the diaphragm actuator).

Micropumps with active valves are much more complex than micropumps with passive valves and need an electronic driver with higher complexity.

Micropumps with nozzle-diffuser valves exhibit an open fluid passage between inlet and outlet port. Any forward or backpressure between inlet and outlet port will generate unwanted parasitic flow during this time, with potentially unwanted effects and a reduced pumping performance.

Publication [6] DE 195 46 570 C1 shows, as a step towards the reduction of design complexity, a micropump exploiting a combined pumping and valve effect of a single diaphragm valve. The device uses an elastic and actuated diaphragm mounted on top of a fluidic chamber. The chamber has a fluidic inlet and a fluidic outlet. The fluidic outlet can be closed via actuation of the diaphragm which carries a mechanically rigid boss in its center, facing the pump chamber. When the valve diaphragm is moved downward, towards the pump chamber, the boss is pressed onto the outlet opening thereby obstructing the fluidic connection between pump chamber and outlet port. When the diaphragm is moved upward, the valve boss is moved away from the outlet opening, thus opening the fluid duct between pump chamber and outlet port. The outlet opening is therefore acting as a valve seat and the active valve is formed by the interaction of the valve seat with and the valve boss located at the actuated diaphragm.

As explained in document [6], a pumping mechanism of this valve is generated by the fact that the fluidic resistance of the path between valve boss and valve seat depends in a nonlinear fashion from the distance h between both and from the pressure difference p over the outlet valve. In a simplified model the flow is proportional to ph³, in a more complex model it is proportional to p^{x}h^{y}, with x and y as numerical model parameters. In contrary to that the inlet opening is showing the fluidic characteristic of an orifice, with a flow proportional only to the product of the square root of the pressure difference over the orifice and the constant effective cross sectional area of the inlet opening. As this is similar to the design of peristaltic micropumps, it is expectable that the same pumping mechanism will also be found in the devices shown in publication [5].

The movement of the valve boss from the opened to the closed position will therefore generate a highly nonlinear increase of the fluidic resistance over time, due to the sharp decrease of the parameter h³. On the other hand, the movement of the valve boss from the closed to the opened position will generate a highly nonlinear decrease of the fluidic resistance. The fluidic resistance of the inlet opening does only depend on the pressure difference over the inlet opening.

Therefore, as explained in [6], during the suction phase an opening of the valve will generate a high underpressure in the fluidic chamber, while the almost closed outlet valve is presenting a relatively high fluidic resistance and while the inlet opening will present a lower fluidic resistance. As a result, fluid will be sucked preferentially from the inlet into the fluidic chamber, with a smaller contribution of fluid sucked back from the outlet into the fluidic chamber. As the underpressure in the fluidic chamber is eventually decreasing to zero due to this influx, the net influx will happen via the inlet.

During the delivery phase a closure of the valve will generate a high instantaneous overpressure in the fluidic chamber, while the open outlet valve is presenting a low fluidic resistance and while the inlet opening has to present a higher fluidic resistance than the outlet valve. The result is a higher outflux of fluid into the outlet port, compared to the influx during the suction phase, and consequently a smaller backflow of fluid into the inlet port. The total net flow during a pump cycle will be towards the outlet.

Publication [6] reveals several drawbacks of the valve-micropump concept presented there:
The micropumping effect is depending on a delicate balance between the dynamic variations of the pump chamber pressure, the dynamic change of the gap height between valve boss and valve seat and the dynamic variation of the flow through the inlet port. This presents design constraints, as only a tailored set of parameters will lead to a pumping effect.

The fluidic resistance of the inlet port and the fluidic resistance of the open outlet port have to be matched in such a way that a net outflux is present in total. To achieve that, the inlet opening has to be limited in its size, which in contrary limits the influx of fluid during the suction phase.

The pump chamber pressure has to be set to certain maximal and minimal values for certain time periods of the suction and delivery phase, to achieve the desired net influx and outflux. This puts requirements on the diaphragm stroke and the diaphragm actuator performance. Publication [6] proposes controlled variations of the diaphragm stroke to tailor the pump chamber pressure. This will complicate the electronic driver for the actuator.

The micropump according to [6] shows large time periods with an open fluid passage between inlet and outlet port. Any forward or backpressure between inlet and outlet port will generate unwanted parasitic flow during this time periods, with potentially unwanted effects and a reduced pumping performance.

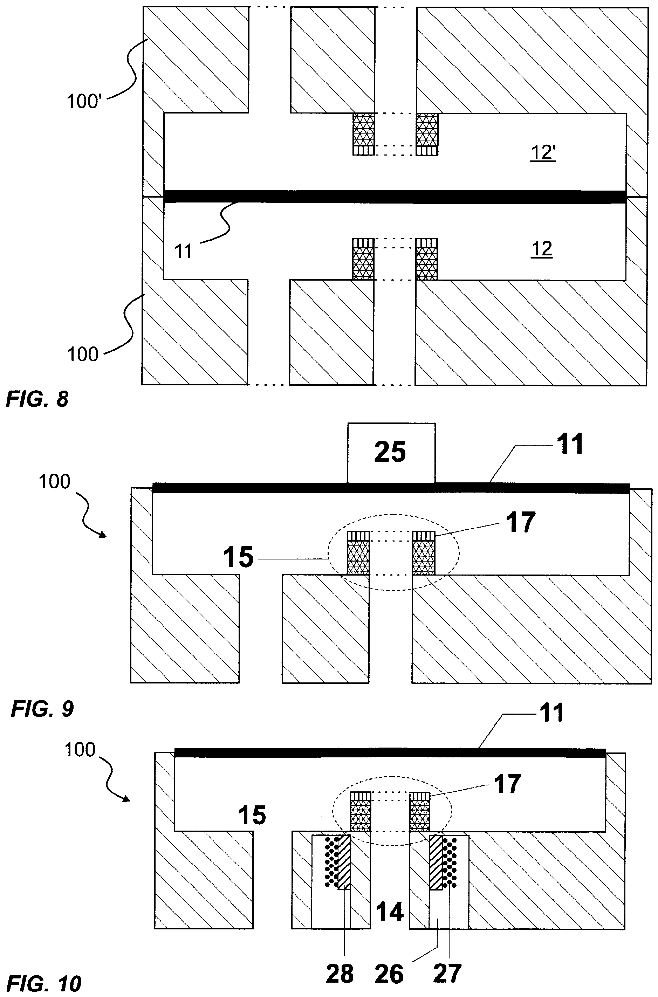

In the suction phase, the pump according to Fig. 1 of publication [6] will only start building an under pressure in the pump chamber when the outlet valve is opened. This is clearly visible from Fig. 1 in [6] and can also be derived for Fig. 8 in [6]. In Fig. 1 of [6] the cantilever-type piezoactuator will not be able to deform the pump diaphragm before the valve boss is moved upwards. In Fig. 8 of [6] the rigid valve boss will significantly hinder deformation of the elastic pump diaphragm in the upward movement. Therefore, volume will only be transported, if both valves are open at the same time, with the disadvantage of unwanted backward flow and backward pump. ing. This is a main difference to the invention described here, as described later.

From publication [7] US 2013/0186078 A1 a micro-valve is known which has an elastically deformable valve lip. This micro-valve is formed from two firmly connected substrates and preferably has an actuator element, for example that is diaphragm-driven, for the controlled opening and closing of a first and/or second passage. This document further relates to a method for producing such a micro-valve and to a micro-pump which uses at least one such micro-valve. Said micro-pump is intended to be used in particular in conjunction with the development of an artificial sphincter. The micro-valve has a first substrate and a second substrate which are nondetachably joined to each other in order to form a controllable fluid flow section, and at least one first passage and at least one second passage. According to the invention, the micro-valve has at least one elastically deformable seal structure which, for example, can be formed by a photostructurable silicone, to seal off the first and/or second passage.

Document [7], however, only discloses using relatively thin photostructured valve lips which cannot be elongated in a vertical direction for achieving a pumping action based on a first opening and only one valve seat around a second opening.

US 2011/168936 A1 discloses a microvalve, in particular for a micropump, which includes a valve member which is adjustable between an open position and a closed position, in contact with a valve seat in its closed position. The valve seat is made of a polymer material. A micropump and a manufacturing method are also described.

DE 10 2005 038 483 B3 shows a micropump comprising a microvalve according to the preamble of claim 1.

US 5 378 120 A discloses an ultrasonic hydraulic booster pump and braking system. The ultrasonic hydraulic booster pump comprises a backing plate housing defining a cavity closed at one end by an end cap, the end cap having an inlet port and the backing plate housing having an outlet port. A diaphragm having a plurality of openings is mounted between the end cap and a spacer member located within the cavity. A plurality of annular shaped piezoelectric rings or discs are located within a ring housing disposed within the spacer member. A plug member with a through opening extends through a central through opening in the ring housing and includes a valve seat disposed closely adjacent a solid central portion of the diaphragm, and the end cap includes a valve seat disposed closely adjacent the opposite side of the diaphragm. An alternating voltage applied to the piezoelectric rings causes excitation thereof and resonance of the diaphragm so that hydraulic fluid is pumped from the inlet port and out the outlet port. The ultrasonic hydraulic booster pump provides increased or boost pressure in a hydraulic braking system.

It is an object of the present invention to provide an improved structure to create a pumping effect with a simple structural, mechanical and fluidic design.

This object is solved by the subject matter of the independent claims. Advantageous embodiments of the present invention are the subject matter of the dependent claims.

The present invention is based on the idea of introducing a hysteretic deformable valve mechanism, which is based on the deformation of a flexible valve seat, so that a favourable modulation of the valve's gap width is achieved during an alternating closing and opening of a valve. In addition, a time period is generated at the transition point between the opening and closing state of the valve, where the valve stays closed due to elastic compression and stretching of the valve seat. Therefore, the valve shows a hysteresis of the fluid flow with respect to the position of the pump diaphragm.

According to the present invention, a fluid pump according to claim 3 is disclosed.

A valve seat is arranged inside the pump chamber around the second opening and protrudes with an undeformed height from the second opening into the pump chamber towards the pump diaphragm, so that the deflectable diaphragm is operable to close and open the outlet's fluidic pathway, respectively, by coming in contact with the valve seat and getting away from it. According to the present invention, the valve seat comprises an elastic body and a gasket with a sealing surface.

The advantage of this solution can firstly be seen in the particularly simple constructional design. Moreover, experiments have shown that the fluid pump according to the present invention has a low degree of fluid back flow and is very stable against counter pressure at the outlet because the outlet remains closed during a comparatively long time of each pumping cycle.

The valve is designed in such a way that it can be compressed by the diaphragm, when the diaphragm moves down on the seat, thus reducing its original height. It is also designed in such a way that it can be elongated from its original height while being in contact with the upwardmoving pump diaphragm. Finally, the gasket and the sealing surface are designed in such a way that they can adhere to the diaphragm due to hydraulic or other forces.

With "rigid" as used in this application is meant stiff, unyielding, i.e. a rigid structure is not adapted to be deformable during normal use of the structure.

With "flexible" as used in this application is meant non-stiff, non-rigid, i.e. bendable but not stretchable. A flexible structure is adapted to be deformable in a certain direction during normal use of the structure, but does not elongate. The length does not change during bending.

With "stretchable" as used in this application is meant resilient, i.e. elastically deformable with elongation. A stretchable structure is adapted to be elastically deformed during normal use (with elongation).

With "compressible" as used in this application is meant resilient, i.e. elastically deformable with a reduction of size in the direction of an applied pressure. A stretchable structure is adapted to be elastically deformed during normal use (with reduction of dimension).

According to the first aspect of the invention, said pump diaphragm can keep the gasket and the sealing surface attached while moving away from the valve during the opening phase. Therefore, the elastic valve is elongated and the pump diaphragm will separate from the sealing surface in a higher position compared with the height when both came into contact during the closing phase.

According to a second aspect of the invention, said diaphragm moves away from the elastic valve seat fast enough in the moment of separation, to be able to drag and stretch the gasket and sealing surface further along, by the means of an underpressure created between the valve seat and the separating diaphragm. Therefore, when the diaphragm moves upwards and separates from the valve seat, the gap between valve seat and pump diaphragm will be smaller in comparison to a situation, where the valve seat is considered to be made from a more rigid material.

Both effects are creating a higher fluidic resistance in the outlet during the suction phase of the micropump, resulting in a much more efficient pumping when compared with the device in publication [6].

A fluid pump according to the first and second aspects of presented invention can also be utilized as an active valve, to either block or allow the flow in both directions.

The presented pump or valve can be set to be normally open, i.e. having a fluidic connection between the inlet and outlet in the unactuated status of the diaphragm, if there is a gap between the diaphragm and the seat in the natural position. It can also be set to be normally closed, i.e. having no fluidic connection between the inlet and outlet in the unactuated status of the diaphragm, if the diaphragm is sitting on the seat in the natural position.

Advantageously, the deflectable pump diaphragm has a much higher stiffness than the elastic body of the valve seat, so that the elastic body does not hinder the movement of the deflectable pump diaphragm in a significant way.

The effect of keeping the outlet closed can be achieved by allowing the valve seat to follow the movement of the deflectable diaphragm and therefore exhibiting a hysteretic effect. According to an advantageous embodiment, said elastic body of the valve seat has an elasticity that its height is reduced by compression when the diaphragm is deflected towards the pump body. Moreover, the elastic body of the valve seat may be stretchable so that its height is increased when the diaphragm is deflected away from the pump body.

For effectively operating the pump, the elastic body has a cylindrical shape being arranged around the second opening.

The elastic body may have a mounting flange attached to the pump body around the second opening and having a larger radial thickness than the radial thickness of the elastic body has at a distal end that comes into contact with the deflectable diaphragm. Such a construction allows a firm attachment of the elastic body to the surface of the pump body inside the pump chamber.

In order to choose optimal material characteristics for the sealing function on the one hand, and for the deformation of the valve seat on the other hand, the elastic body and the gasket are fabricated as separate parts. However, it is clear for a person skilled in the art that the valve seat with these two components may also be fabricated as one integral part.

According to an advantageous embodiment of the present invention, the valve seat has a sealing region that is arranged to come into contact with the deflectable diaphragm and a mounting region where it is attached to the pump body, wherein an orifice in the sealing region may have a smaller diameter than a channel leading from the pump body over the mounting region through the valve seat toward the orifice. Thereby, the pressure distribution in the fluid is generated in a way that the sealing region sucks itself against the deflectable diaphragm during the upward movement.

Moreover, the valve seat may have an area with reduced wall thickness. Thereby the compression and stretching is facilitated. Alternatively or additionally, the valve seat may comprise a bellows shaped area, having a U-profile or a V-profile. Also, the wall thickness of the valve seat may be changed along its length in a stepped or continuous way.

In order to prevent the valve seat being dislocated from the pump body by the applied pressure,

the valve seat may be mounted to be partly received within a recess that is formed at the second opening in the pump body.

A particularly symmetric pressure distribution and smooth operation can be achieved when said second opening is arranged concentrically with the pump diaphragm.

According to a further advantageous embodiment, the gasket comprises a magnetic material, wherein the fluid pump comprises an electromagnetic actuator that is operable to elongate and/or compress the elastic body by interacting with said magnetic material. This allows for an even more precise adjustment of the pump characteristics. The electromagnetic actuator may be located on the deflectable diaphragm outside the pump chamber and close to the gasket so as to interact with the gasket through the deflectable diaphragm. Alternatively, the electromagnetic actuator may be located within the pump body. In particular, the pump body may comprise a ring-shaped recess arranged concentrically with the second opening, wherein the electromagnetic actuator is mounted within said ring-shaped recess. The latter embodiment is more robust and has the advantage that the electromagnetic actuator does not impair the mechanical performance of the deflectable diaphragm.

According to the present invention, a fluid pump system can also combine a plurality of fluid pumps as described above. For instance, the two pumps can be arranged in a way that they share a deflectable pump diaphragm. Thus, by actuating one diaphragm the double amount of fluid can be pumped.

The present invention also provides a method of operating a fluid according to claim 14.

As already mentioned above, the backflow from the outlet can be kept low and the pump resists also high counter pressures at the outlet.

According to an advantageous embodiment the gasket comprises a magnetic material, wherein the fluid pump comprises an electromagnetic actuator that is operated to elongate and/or compress the elastic body by interacting with said magnetic material.

The present invention further relates to a microvalve for a fluid pump according to claim 1.

According to certain aspects of the present invention, a movable valve mechanism is provided to improve the valving functionality of valves and microvalves. The present invention is based on the idea that utilizing a valve seat which, comparable to the diaphragm, can move under the applied pressure at the inlet of the valve, will improve and amplify the valving functionality between the outlet and inlet. In other words, under the applied pressure, the gap between the diaphragm and the valve seat decreases. This movability can be due to the use of a flexible valve seat installed in a way that it can deform/deflect under the applied pressure, for example by having a surface area exposed to the applied pressure. In addition, the movability can be due to the use of a flexible valve holder (also referred to as mounting means) which can deform/deflect under the applied pressure, or it can be due to the use of a flexible embodiment of valve seat in general which can deform/deflect under the applied pressure, or a combination of all.

Therefore, with applying higher pressures on the valve, the gap between the valve seat and diaphragm of the valve will decrease, which consequently simplifies the closure of the valve. With correct correlation between the applied pressure and the resultant variable gap, even a passive self-controlling-pressure/flow device can be realized. The application of this invention can be in various areas of science and technology such as and not limited to micro-total-analysis-systems, lab-on-a-chip applications, cooling of electronic devices, injection systems, dosing and metering setups and others.

The geometrical and material properties of the valve seat, valve holder, and valve embodiment are control variables to achieve the desirable pressure-deflection or pressure-gap profiles.

The accompanying drawings are incorporated into and form a part of the specification to illustrate embodiments of the present invention. These drawings together with a description serve to explain the principles of the invention. The drawings are merely for the purpose of illustrating the preferred and alternative examples of how the invention can be made and used and are not to be construed as limiting the invention to only the illustrated and described embodiments. Furthermore, several aspects of the described embodiments may form - individually or in different combinations - solutions according to the present invention. Further features and advantages will become apparent from the following more particular description of the various embodiments of the invention, as illustrated in the accompanying drawings, in which like references refer to like elements, and wherein:
- **Fig. 1**: shows a schematic cross sectional representation of an exemplary pump not falling under the scope of the present invention.
- **Fig. 2**: shows a representation of the physical parameters needed to describe the pumping for the pump shown in Fig. 1;
- **Fig. 3a-e**: show graphical representations of the pumping with respect to a pumping cycle;
- **Fig. 4**: shows a table with displaced volumes during one pump cycle, with respect to Fig. 3;
- **Fig. 5a-b**: show graphical representations of the pumping.
- **Fig. 6a-b**: show schematic drawings of the gap height, pump chamber pressure and flow through the outlet for a pump cycle, demonstrated for a pump without and with an elastic valve seat, respectively;
- **Fig. 7a-h**: show several embodiments of exemplary valve seats.
- **Fig. 8**: shows a fluid pump system comprising two micropumps according to Fig. 1;
- **Fig. 9**: shows a further modified version of the micropump according to Fig. 1.
- **Fig. 10**: shows a further modified version of the micropump according to Fig. 1;
- **Fig. 11**: shows a schematic cross sectional representation of a micropump according to an embodiment of the present invention in a first operational state;
- **Fig. 12**: shows a schematic cross sectional representation of a micropump according to the present invention in a second operational state;
- **Fig. 13**: shows a diagram illustrating the valve operation for air as working fluid against 2 bar at 1 Hz;
- **Fig. 14**: shows a diagram illustrating the valve seat deflection against pressure for air as working fluid;
- **Fig. 15**: shows a diagram illustrating the valve operation for water as working fluid against 2 bar at 1 Hz;
- **Fig. 16**: shows a diagram illustrating the valve seat deflection against pressure for water as working fluid;
- **Fig. 17**: shows a schematic sectional view of a valve assembly according to an aspect of the present invention;
- **Fig. 18**: shows a further schematic sectional view of the valve assembly shown in Fig. 17;
- **Fig. 19**: shows a schematic sectional view of a valve assembly according to a further aspect of the present invention in a first operational state;
- **Fig. 20**: shows a schematic sectional view of a valve assembly according to a further aspect of the present invention in a second operational state;
- **Fig. 21**: shows a schematic sectional view of a valve assembly according to a further aspect of the present invention.

Fig. 1 shows a schematic cross sectional representation of a first position of an exemplary fluid pump not falling under the scope of the present invention. The pump comprises a pump body 10 and a pump diaphragm 11 which is adapted to be secured to the pump body, in such a way that a pump chamber 12 is defined there between. The diaphragm can move upwards and downwards, in other words it can be deflected towards the opening and away from the openings 13, 14. Said pump chamber is fluid-connected to an inlet and outlet via a first opening 13 and a second opening 14. An elastic valve seat 15, made from a valve seat body 16 and a gasket 17 with a sealing surface, is implemented in the pump body 10 so that at least a part of it protrudes towards the pump diaphragm 11 from the second opening 14. The pump diaphragm 11 is able to close and open the outlet's fluidic pathway 14, respectively, by coming into physical contact with its seat 15, or even pressing it, and by moving away from it.

Fig. 2 shows a representation of the important parameters needed to describe the pumping for the pump shown in Fig. 1. The pump chamber has a volume V defined between the pump body and the diaphragm. This volume increases, when the diaphragm moves upwards, and decreases, when the diaphragm moves downwards. Movement of diaphragm can be described by defining the height h, which is the distance between the bottom of the pump chamber and the central point of the diaphragm. This distance h increases when the diaphragm moves upwards, and decreases when the diaphragm moves downwards. This change in the volume V of the chamber leads to volume flows q₁ and q₂ through inlet 13 and outlet 14, respectively. The sign for the volume flow is considered to be positive when the fluid is exiting the pump chamber, as it is shown in Fig. 2. The distance between the valve seat's sealing surface 18 and the deflectable pump diaphragm 11 is designated as gap width g.

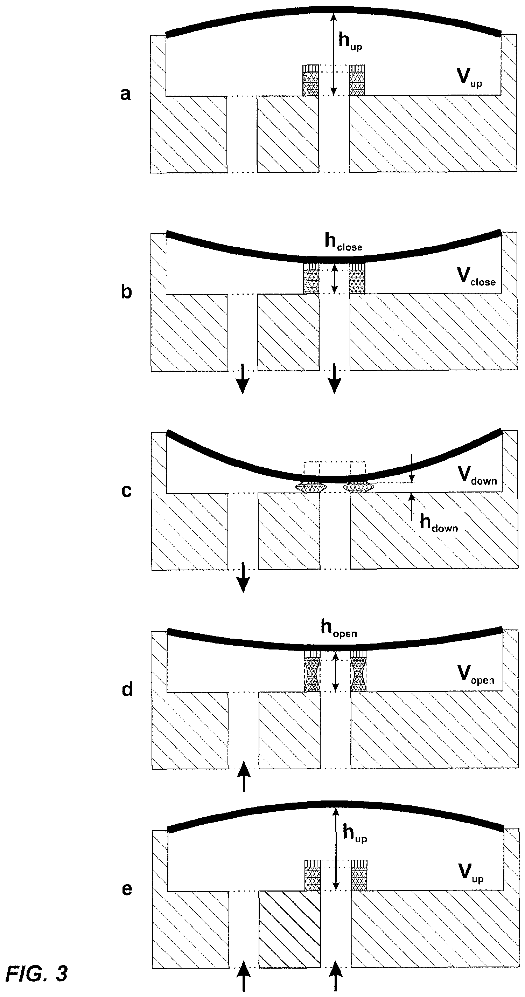

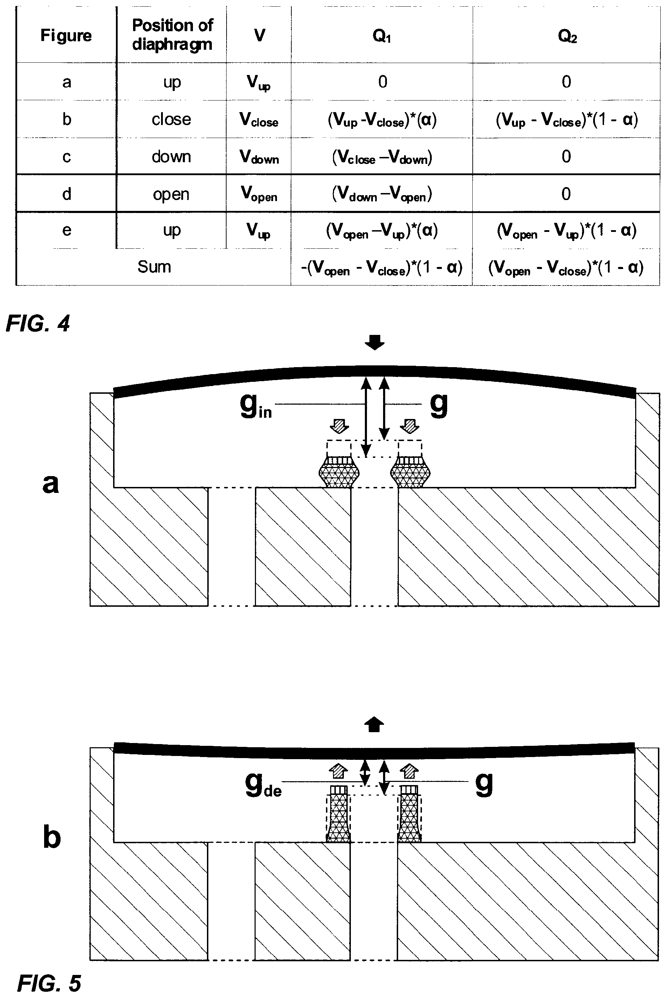

Fig. 3 schematically represents the working principle of the presented pump with respect to the first pumping concept, which is based on the difference between the opening and closing states of the valve. In the following, we consider a full cycle of pumping, starting from the status, where diaphragm is positioned upwards. In each state, the height h and volume V corresponding to the respective state is considered. The table in Fig. 4 summarizes these quantitative parameters.

For a more transparent explanation and in order to focus on the first presented effect and its benefits as such, we neglect the dynamic change in the fluidic resistance of inlet and outlet and dynamic changes of the pressures in the system. This will be more highlighted in the description of the second effect. Furthermore, also fluid is neglected that is displaced in the outlet while the outlet valve is closed (see Fig. 3c and Fig. 3d).

Neglecting the dynamic changes in the resistances, the displaced volume Vᵤₚ - V_{close} will be transferred through the connections 13 and 14 inversely proportional to their resistances, when both connections are open. If Rᵢ is the effective fluidic resistance of inlet 13, and Rₒ is the effective fluidic resistance of outlet 14, with α defined as Rₒ/( Rₒ + Rᵢ), the change of volume in chamber ΔV results in a volume flow (ΔV)*α through inlet 13, and (ΔV)*(1 - α) through outlet 14.

As a starting condition shown in Fig. 3a, consider the diaphragm deflected upwards to the height of hᵤₚ, with reference to the bottom plane of the pump chamber, while the volume of the chamber is in its maximum state Vᵤₚ.

When the diaphragm starts to move downwards, it will land first on the sealing surface of the elastic valve seat at the height of h_{close}, while the chamber has the volume V_{close}, as is shown in Fig. 3b. This movement leads to a fluid displacement out of the pump chamber, both through inlet 13 and outlet 14.

The diaphragm pushes further down and compresses the elastic valve seat to reach the state shown in Fig. 3c, with the height of h_{down} and chamber volume of V_{down}. All volume displacement from the pump chamber does pass through inlet 13, as the outlet 14 is closed.

If the diaphragm moves upwards again, the elastic valve seat will decompress and elongate, due to its elastic behavior and attachment to the diaphragm. It elongates to the height hₒₚₑₙ > h_{close}, where the sealing surface of the valve seat starts to separate from the diaphragm. Still all the volume displacement from the pump chamber passes through inlet 13, where fluid is sucked into the pump chamber, as the outlet 14 is still closed.

Now the diaphragm moves upwards to reach the initial position with the height hᵤₚ to complete the cycle, see Fig. 3d. In this phase fluid is entering the pump chamber both from the inlet 13 and the outlet 14, now with opposite signs of the flow direction when compared to Fig. 3b.

Fig. 4 gives in a table the different volume displacements through the inlet and the outlet for all phases of a pump cycle. One full cycle delivers a net flow of (Vₒₚₑₙ - V_{close})*(1 -α) from inlet to outlet. In the table in Fig. 4 a negative sign for the net flow of the inlet describes fluid entering through the inlet, and a positive sign for the net flow of the outlet means that fluid exits through the outlet.

Fig. 5 schematically represents the working principle of the presented pump with respect to the second pumping effect, which is based on a transient deformation of the elastic seat in the suction and delivery phases of the pump.

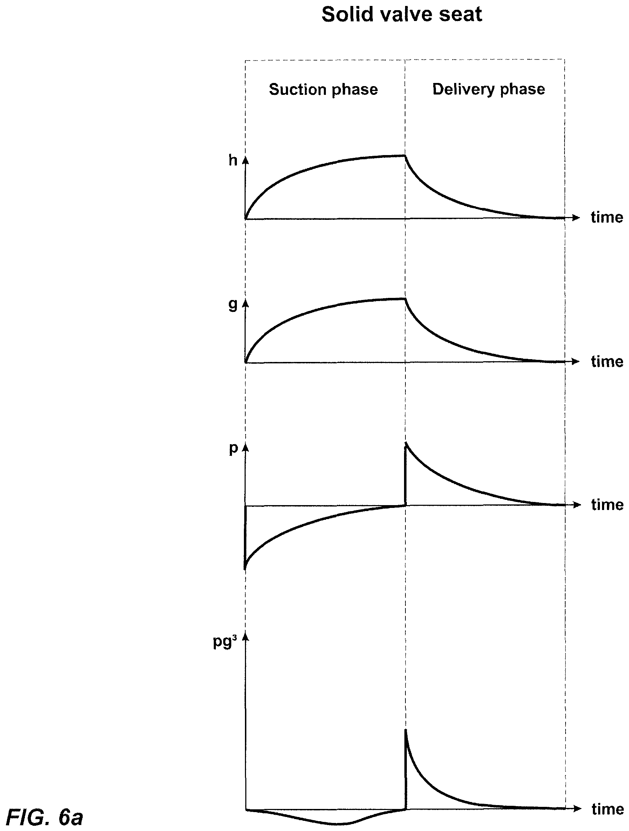

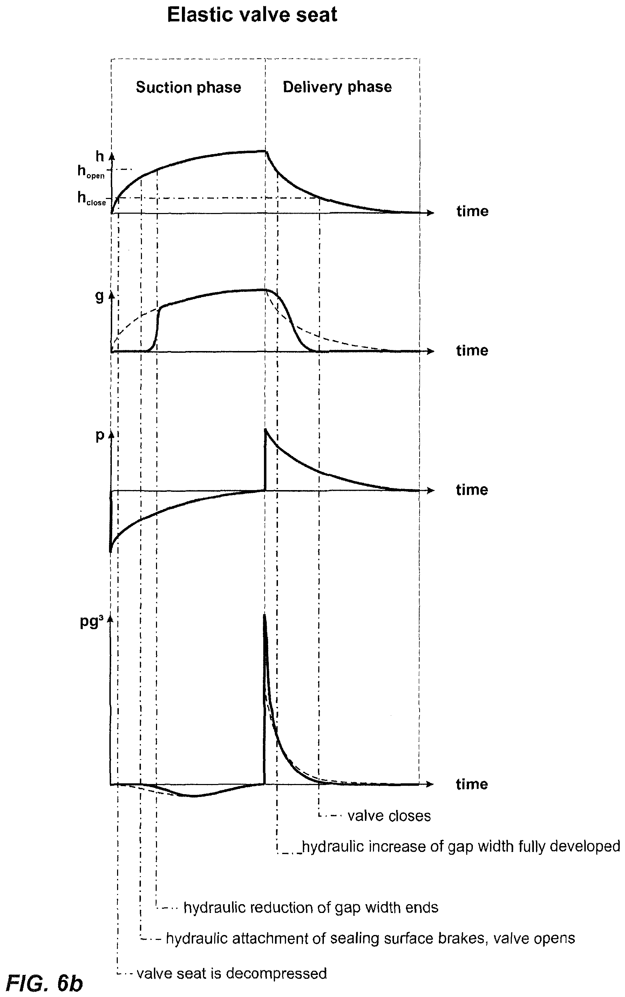

For an explanation the dynamic variation of the actuator stroke h, the gap width g, the pump chamber pressure p and the flow q₂ through the outlet are shown in Fig. 6, left, for a single pump cycle of a pump with a rigid valve seat and valve boss, as disclosed in [6].

As explained in [6], an under pressure is generated in the pump chamber during the suction phase and the gap height between the valve seat's sealing surface and the diaphragm g (which defines the fluidic resistance of this port) is increasing due to the upward moving of the pump diaphragm. Therefore, the gap height g starts from zero and reaches to its maximum value, while the underpressure starts at its maximum value and reaches to zero. During the delivery phase an overpressure is generated in the pump chamber and the gap height g is decreasing from its maximum value to zero, while the overpressure is in its maximum as well, and falls zero as well. As the product of the chamber pressure p and the gap height to the third power g³, i.e. the factor pg³, is a measure of the fluid flow through the outlet, a lower share of flow will enter the pump chamber through the outlet during the suction phase, and a higher share of flow is dispensed into the outlet during the delivery phase. As a result, a net fluid flow will be dispensed into the outlet through every pump cycle.

The introduction of an elastic valve seat with hysteretic behavior, as used in this invention, will amplify this effect tremendously. The differences are shown in Fig. 6, right. During the suction phase, see Fig. 3d, the valve seat is still compressed and will expand first to its undeformed height. In this time period, a huge under pressure is generated in the pump chamber with no effect on the flow through the outlet into the pump chamber which is zero due to the closed valve. After decompression the valve seat will adhere to the pump diaphragm while this is moving upward. Therefore, the outlet stays closed and the flow through the outlet into the pump chamber is still zero while the pressure in the pump chamber decreases. After detachment of the valve seat from the pump diaphragm the remaining under pressure in the pump chamber will generate a small flow between the valve seat's sealing surface and the pump diaphragm. The sealing surface and valve gasket can be tailored in such a way that they are still attracted to the diaphragm via suction forces, resulting in a decreased valve gap g_{de}. As a further consequence, a further elongation of elastic valve seat will happen as the diaphragm moves further upwards and the valve gap stays smaller, as schematically shown in Fig 5b. This effect will increase the fluidic resistance of this port significantly and reduce undesired flow through this port entering the pump chamber. Only after full opening of the valve a significant backflow from the outlet to the pump chamber will occur. However, the displaced volume is much smaller when compared to a micropump with a rigid valve seat.

At the start of the delivery phase, a high overpressure is generated in the pump chamber by the downward movement of the pump diaphragm. The elastic valve seat can be designed in such a way that it is compressed and is moving downward with respect to the pump diaphragm, although the pump diaphragm is not yet in contact with its sealing surface. As a result, the gap g between pump diaphragm and sealing surface is dynamically increased to a value gᵢₙ, as schematically shown in Fig 5a. This will decrease the fluidic resistance of this port and increase the desired flow through this port exiting the pump chamber.

In general, as the fluid flow through the outlet is related to pg³, an elastic valve seat with a dynamically changing gap height does increase or decrease the net flow during each pumping cycle with a cubic factor.

The pump diaphragm and the pump body can be made from any material suitable for a desired application and for the actuation mechanism in use, e.g. metals, polymers, glass, ceramics, piezoceramics, ferromagnetic material, or silicon, alone or in combination. In the region where mechanical contact with the valve seat will happen, the mechanical stiffness of the pump diaphragm has to be significantly higher than the mechanical stiffness of the elastic valve seat.

The valve seat is preferably made from an elastic material, e.g. silicone, rubber or other elastomers.

The shape of the pump diaphragm can be tailored appropriate to the desired application and to the actuation mechanism in use, e.g. as a square, octagon, circle or rectangle.

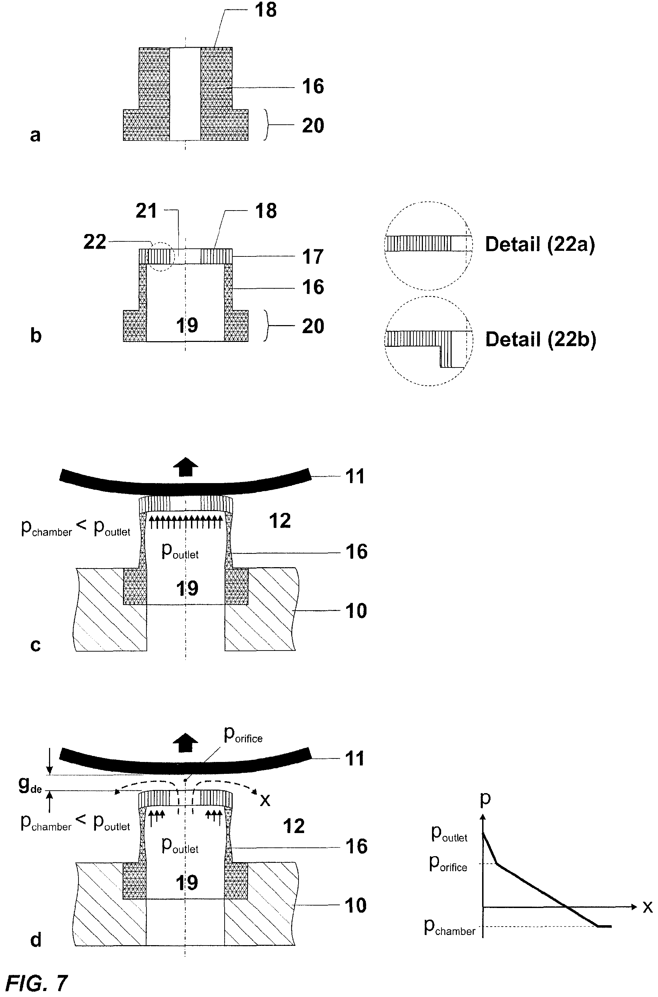

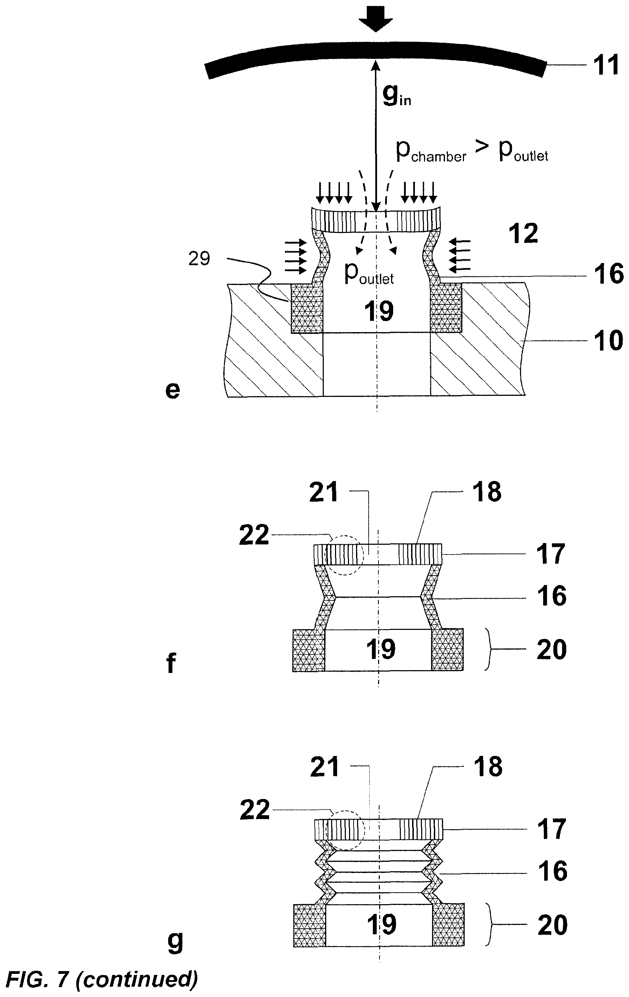

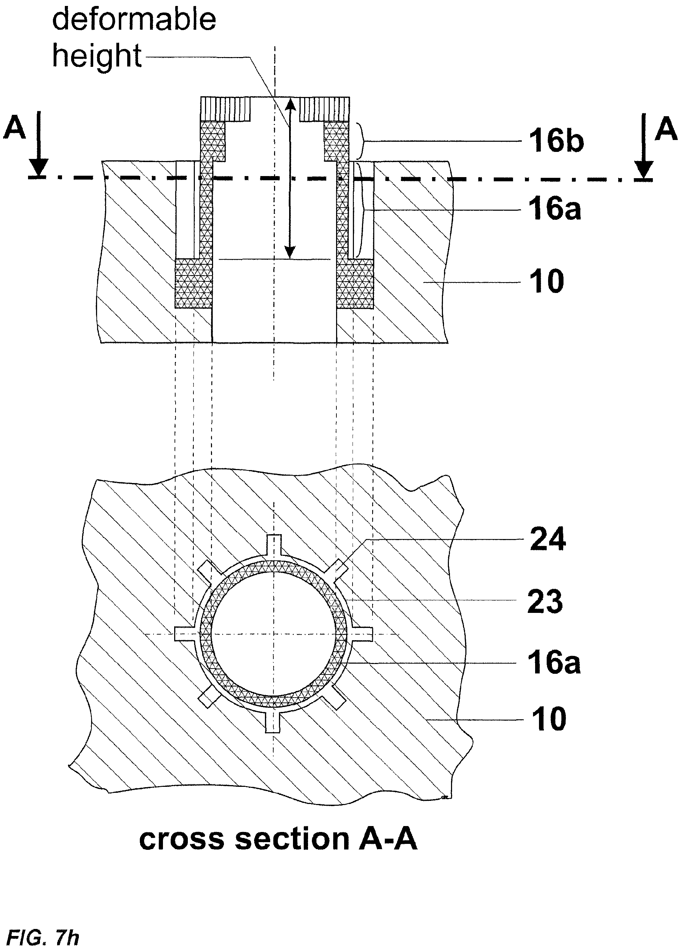

Fig. 7 shows several preferred examples of the elastic valve seat and explains the functions of the design elements in use. The drawings show the cross sections of a round, tubular body in a side view. However, any shape of the tubular body is conceivable if required, i.e. in a top or bottom view the valve seat can also have a square, rectangular, or other shape.

According to Fig. 7a the simplest version is a valve seat body 16 from elastic material, with only a planar sealing surface 18 on the top, facing the pump diaphragm and a fluid channel 19 reaching through the valve body 16 and the sealing surface 18. The base 20 of the seat body can be made in a desired shape and geometry different from the rest of the valve seat. This is done to realize e.g. a mounting flange for the whole elastic seat.

Fig. 7b shows a version with a valve seat body 16, a separate gasket 17 and a sealing surface 18 on top of the gasket, facing the pump diaphragm. The channel 19 is made with a stepped cross section, i.e. its diameter is larger in the valve body 16 and smaller in the gasket 17. Therefore, an orifice 21 is generated in the gasket in such a way that the gasket is also forming an elastic circular lip 22 facing towards the channel axis. This lip can be designed in a straight fashion, see detail 22a, or exhibit an inner, thinned and prolonged wall of the orifice, see detail 22b. Also, the channel wall in the valve seat body is made thinner, which allows for a higher elasticity of the same.

In this embodiment, the pressure difference between the outlet and the pump chamber will press the gasket and the sealing surface against the pump diaphragm during the start of the suction phase of the micropump, see Fig. 7c and also Fig. 3d. The tubular valve seat body, due to its thin wall, will elongate as the pump diaphragm moves upwards and allows the gasket staying attached to the pump diaphragm due to the mentioned under pressure.

At higher deflection of the pump diaphragm the valve seat surface is detached from the pump diaphragm, see Fig. 5b. Now, a small lateral flow will be generated between the elastic valve gasket and the pump diaphragm. This flow is accompanied by a pressure drop in the fluid channel formed by the pump diaphragm and the sealing surface of the valve seat. Again, a pressure difference will arise across the valve gasket and will press the elastic gasket towards the pump diaphragm, generating a decreased gap width g_{de}, as explained above. Fig. 7d shows the corresponding graphical illustration of this effect. The same effect will happen at the inner, thinned and prolonged wall 23 of the orifice, with the effect, that the cross section and, hence, the flow through the orifice is reduced.

As a second effect, the thinner wall of the valve seat body will allow for a downward movement of the valve gasket and sealing surface during the delivery phase of the micropump, see Figs. 3a, 3b and 5a. In this phase fluid is pumped through the elastic valve seat. Following known laws of hydrodynamics, a pressure drop occurs primarily across the narrower orifice present in the valve seat gasket. Therefore, a lower pressure is present in the channel section of the valve seat body with respect to the pump chamber. As a consequence, the side walls of the valve body will be laterally deformed inward and the valve gasket and sealing surface will be lowered, as shown in Fig. 7e. The result is an increased gap width gᵢₙ, as explained above. Further, if the pump diaphragm comes close to the valve gasket, a local overpressure is generated in the small gap in between. This will also push the valve seat downwards.

The valve design according to Fig. 7b has the slight disadvantage that during the suction phase, with under pressure in the pump chamber, the side walls 16 of the valve body will be deflected outwardly, i.e. away from the channel 19. The effect is not shown for reasons of clarity in Fig. 7c. Therefore, the valve gasket 17 will also be moved away from the pump diaphragm in this case. This is a detrimental effect, as it will counteract the attraction of the valve gasket to the pump diaphragm as described above and in Figs. 7d and 7e.

To solve this problem, if required, the valve embodiment in Fig. 7f has a valve body 16 with a single bellow, i.e. the walls are in a V-shape towards the channel 19. During the suction phase an under pressure in the pump chamber with respect to the outlet pressure will also deflect the valve body outwards, away from the channel. However, the inclined walls of the valve body induce a vertical upward force at the gasket and will raise it towards the pump diaphragm, which is desirable as it assists the effects described in Figs. 7c and 7d. During the delivery phase the overpressure in the pump chamber will again deflect the valve body inwards, towards the channel, with the effects described in Figs. 7e.

As shown in Fig. 7g, the shape of the valve seat body 16 can be further tailored in an appropriate way to allow for a preferred vertical elongation. Here, the valve seat body is made in form of a multiple of bellows that is preferably elongated in vertical direction. However, any other shape or form of the wall curvature is conceivable, e.g. a variable wall thickness, variable wall shape or a variable cross section of the channel 19.

As shown in Fig. 7h, the elastic and deformable part of the valve body can be embedded, at least in part, into the pump body to achieve a larger deformable height of the same. This can also be used to prevent the undesirable outward deflection of the valve body 16 during the suction phase, as described above. For this purpose, the side wall of the pump body's cavity, facing the embedded part of the valve body, can be designed as a mechanical obstacle 23 that prevents the valve body from an outward deflection. Fluidic channels 24 are provided in the obstacle 23 alongside the valve body for pressure equilibration. The valve body 16 itself is divided into two segments, with segment 16b having a larger wall thickness than segment 16a. Therefore, elongation and compression will happen preferably in segment 16a, and an unwanted outward deflection of segment 16a is prevented.

Fig. 8 shows an example of a fluid pump system comprising two parallel micropumps 100, 100' according to Fig. 1. Here, the same pump diaphragm 11 is used to drive two valve units placed onto both sides of the diaphragm in an alternating way.

Fig. 9 shows a further example of the micropump according to Fig. 1. This embodiment can also be used, with minor modifications, for the micropump in Fig. 8. Here, the valve seat's gasket 17 is made magnetic, e.g. by using magnetic materials, layers from magnetic material on other materials or by embedding magnetic particles or layers into a gasket made from another material. The gasket can be magnetized in form of a permanent magnet or can be made as a soft magnet. On top of the pump diaphragm 11 an electromagnetic actuator 25 is mounted, e.g. an electromagnet made from a coil and a ferrite core facing the valve seat. As known from usual electromagnets, the valve gasket can be attracted towards the magnetic actuator if the gasket has soft magnetic properties. It can also be attracted or repelled by the magnetic actuator, if it has permanent magnetic properties, by changing the direction of current in the actuator's coil and, hence, the direction of the magnetic field emitted by the actuator. In another version shown in Fig. 10, the magnetic actuator is integrated into a circular recess 26 in the pump body, e.g. as a coil 27 with a ferrite core 28 surrounding the outlet 14 below the elastic valve seat.

For micropump operation the magnetic actuator is turned on and turned off synchronous to the diaphragm movement as required. As an effect, the gap height g and the hysteretic effect of the elastic valve can be improved and/or adjusted with another degree of freedom. Also, a dynamic change of the gap height is possible by an according dynamic change of the current flow through the magnetic actuator. Also, the magnetic actuator can be used to increase the performance of the valve function, e.g. by closing the valve both with a downward movement of the pump diaphragm and with an activation of the actuator. Finally, the magnetic actuator can be used to regulate the flow rate of the micropump, by adjusting the gap height g under operation in a required way.

In summary, the present invention provides a device acting as a micropump that uses only a single actuated membrane for providing a unidirectional flow between an inlet and an outlet. The same device can employ an active valve function, with actuated on and off conditions as well as with a preferential normally-on or normally-off function. By utilizing a flexible seat member in a simple structure, two physical effects are created, which together create a pumping effect. Within the first aspect, the flexible seat opens and closes the fluidic port in different positions, in a hysteretic manner. In the second aspect, a dynamic change in resistances is amplified by the design and deformation of the flexible valve seat. The application of this pump can be in various areas of science and technology such as and not limited to micro-total-analysis-systems, lab-on-a-chip applications, cooling of electronic devices, injection systems, dosing and metering setups and others.

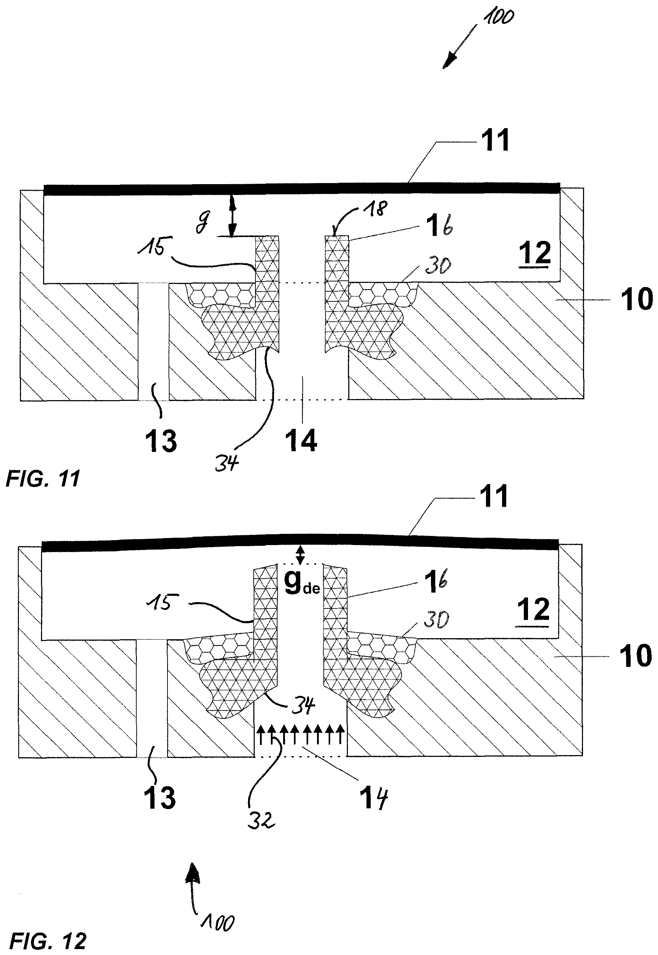

Fig. 11 and 12 illustrate an aspect of the present invention. In particular, Fig. 11 shows a schematic cross sectional representation of a micropump 100 according to an invention embodiment in a first operational state, while Fig. 12 shows the same micropump 100 in a second operational state. In the state shown in Fig. 11, no pressure differences act on the valve seat 16, or on the diaphragm 11.

According to this aspect of the present invention, a movable valve mechanism is provided to improve the valving functionality of valves and microvalves. Although the Figures depict the valve in the application environment of a micropump 100, it is clear for a person skilled in the art that the valve with a valve seat that moves under the actuation of a backpressure can be used with any other suitable fluid flow control arrangement as well.

As shown in Fig. 11 and 12, the valve seat 16 can move, comparable to the diaphragm 11 (also referred to as membrane), under a pressure 32 that is applied at the opening 14 of the valve. Thereby, the valving functionality between the first opening 13 and the second opening 14 is improved and amplified. Under an applied pressure 32, the gap between the diaphragm 11 and the elastic body 16 of the valve seat 15 decreases from g to g_{de}. In other words, the valve seat's sealing surface 18 moves closer in a direction from the pump body 10 towards the diaphragm 11.

This movability can be simply due to the use of a flexible valve seat material which can elongate because of the underpressure created in the narrow region between the diaphragm and the valve seat due to the Bernoulli effect, or can be due to the use of a flexible valve seat 16 installed in a way that can deform/deflect under the applied pressure, for example by having a surface area exposed to the applied pressure. As becomes clear from a comparison of Figures 11 and 12, the elastic body 16 of the valve seat 15 comprises at least one actuation region 34 for being actuated by the applied fluidic pressure 32 directed from the opening 14 towards the pump chamber 12.

In addition, the movability can be due to the use of a flexible mounting means (also called valve holder) 30 which can deform/deflect under the applied pressure 32, or it can be due to the use of a flexible embodiment of valve seat in general which can deform/deflect under the applied pressure, or a combination of all. Also the valve seats shown in Fig. 7b-h comprise an actuation area that is formed by the elastic circular lip 22 facing towards the channel axis.

Due to the presence of the actuation area 34 (and 22), with applying higher pressures on the valve, the gap between the valve seat and diaphragm of the valve will decrease, which consequently simplifies the closure. With correct correlation between the applied pressure and the resultant variable gap, one may even realize a passive self-controlling-pressure/flow device. The application of this invention can be in various areas of science and technology such as and not limited to micro-total-analysis-systems, lab-on-a-chip applications, cooling of electronic devices, injection systems, dosing and metering setups and others. The geometrical and material properties of the valve seat, valve holder, and valve embodiment are control variables to achieve the desirable pressure-deflection or pressure-gap profiles.

Experimental results of the valve arrangement shown in Fig. 11 and 12 will now be explained. In the following, the achieved experimental results of the valve operation under 2 bar (200 kPa) of pressure with air as well as water as our liquids are provided. The deflection (in µm) of the valve seat under various pressures is provided for both cases. The analyzed valves are suitable for handling (opening and closing) pressure range of 0 - 2 bar. For more than 2 bar, the valve deflection is more than what membrane deflection can handle, i.e. the valve cannot open, and stays closed.

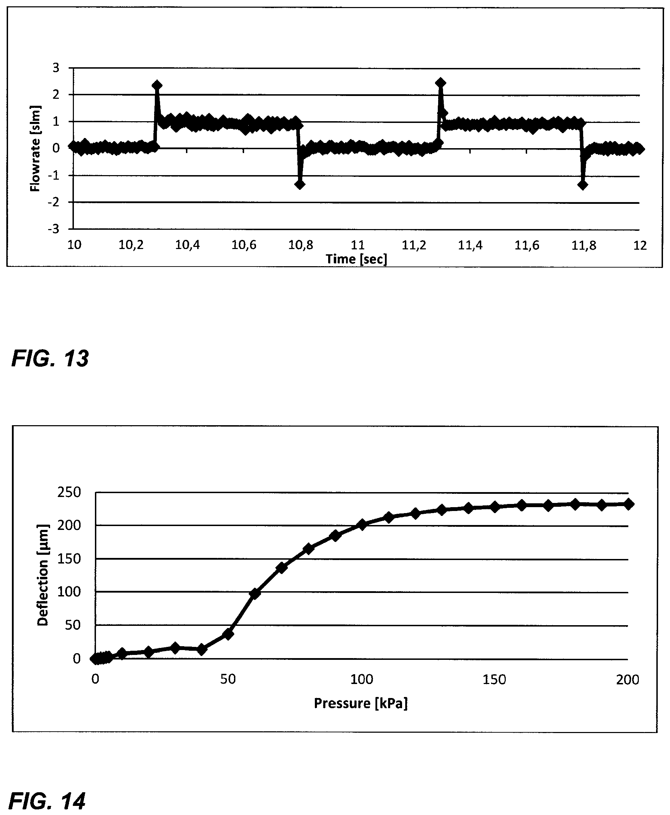

Fig. 13 and 14 accordingly illustrate the valve operation for air as working fluid against 2 bar at 1 Hz and the valve seat deflection against pressure for air as working fluid, respectively.

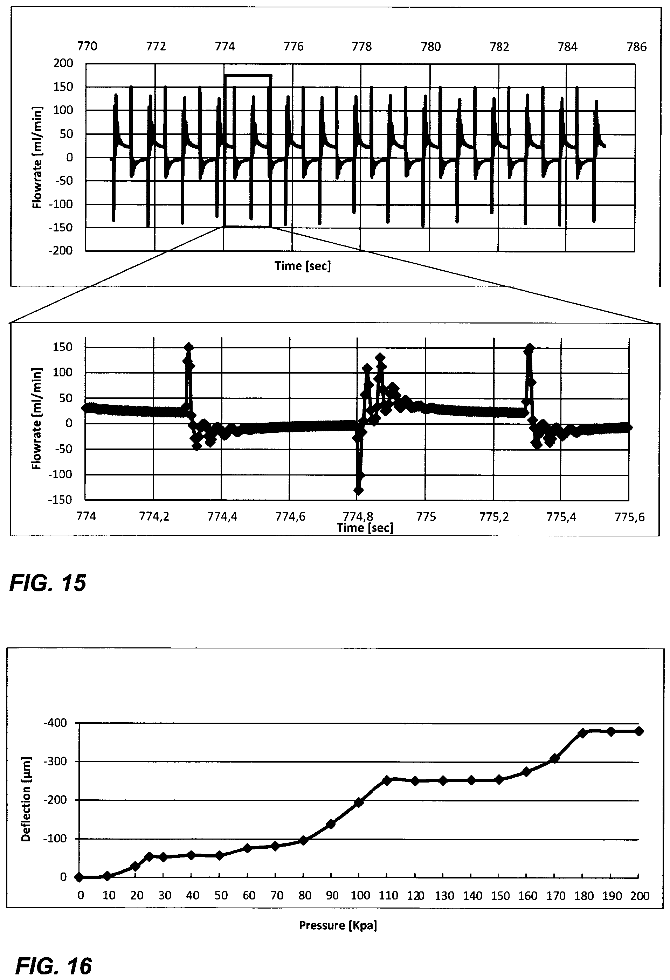

Furthermore, Fig. 15 and 16 illustrate the valve operation for water as working fluid against 2 bar at 1 Hz and the valve seat deflection against pressure for water as working fluid, respectively.

The deflection of the valve seat under pressure when working with water is more than when working with air (for example the deflection for air is around 234 µm under 200 kPa, but for water is around 380 µm). This is due to the extra underpressure created in the narrow region between the membrane and the valve seat, in the case of water. The under pressure comes from the Bernoulli effect, and is negligible for air as the density of the air is negligible.

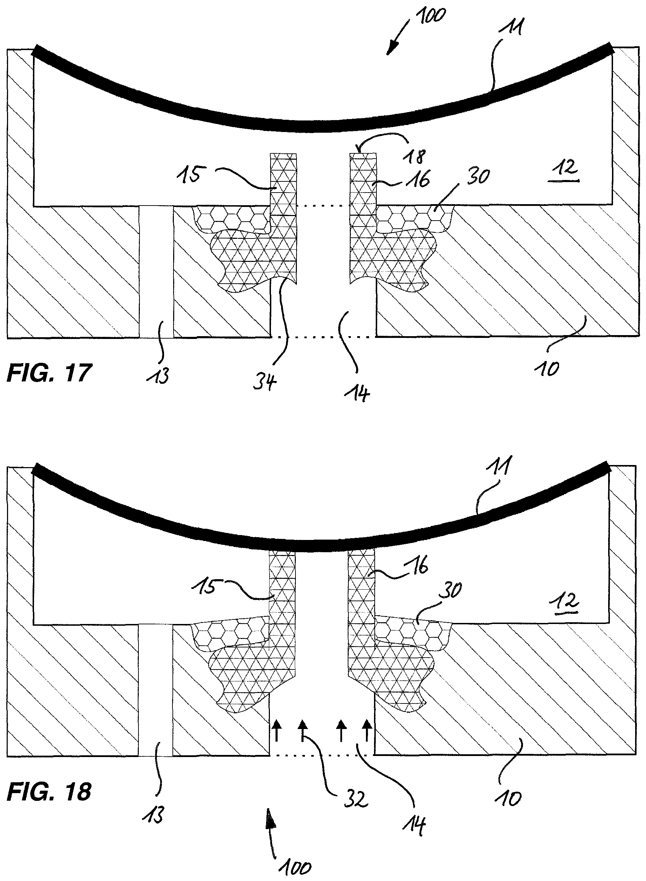

Considering the initial gap g between the membrane 11 and the valve seat 15, the membrane's maximum deflection and the valve seat's deflection under the pressure (which is a function of the geometry and material properties of the valve seat, the valve holder, and the valve's design), the working rage of the valve 100 can be tuned. That is, the pressure operational window of the valve 100 can be shifted to higher pressures, as an example to 1 bar to 3 bar, which means that the valve would require a minimum pressure to operate, in this example 1 bar. This can be achieved by using a relatively stiffer material or using a stiffer geometry for the valve seat, valve holder or valve embodiment. The same effect can be achieved for example by adjusting an initially larger gap *g* between the membrane 11 and the valve seat 15. Thus, even with the maximum deflection of the membrane 11 the valve still remains open as shown in Figure 17. Therefore, the valve 100 requires a minimum pressure 32, in which the valve seat 15 deflects enough to reach to the operating range of the membrane 11, so that with the membrane's activation, the remaining gap can be closed as shown in Figure 18. Thus, a valve with shifted operational pressure window is achieved with the advantage of being able to close against higher pressures, however, with the disadvantage that it requires a minimum pressure to be able to close.

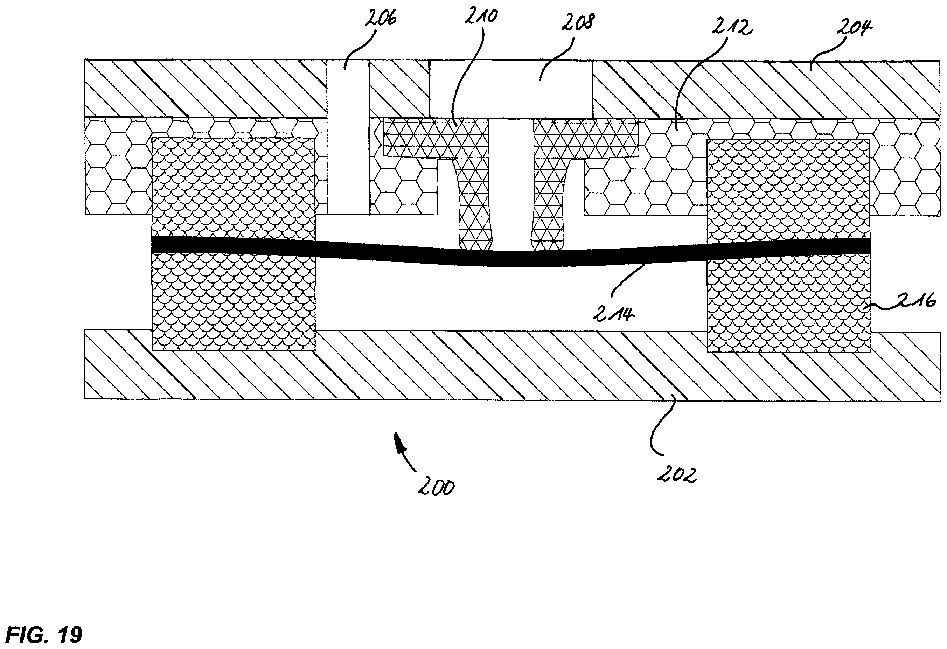

Turning now to Figure 19, same shows a sectional view of a valve assembly according to the present invention. In particular, Figure 19 shows another configuration of the valve to realize an initially compressed valve seat, which assures a normally-closed valve configuration. The valve 200 comprises a bottom plate 202 and a connection plate 204. The connection plate has a first opening 206 and a second opening 208. An elastic valve seat 210 is arranged at the second opening 208 and is fixed by a flexible valve holder 212.

A diaphragm 214 (also called membrane in the following) serves for actuation of the valve. For instance, a piezoelectric actuator may be arranged on the diaphragm for changing its position. Alternatively, also radially applied forces may be applied which cause the membrane to buckle. Sealing fixing means 216 seals the diaphragm 214 against the bottom plate 202 and the connection plate 204.

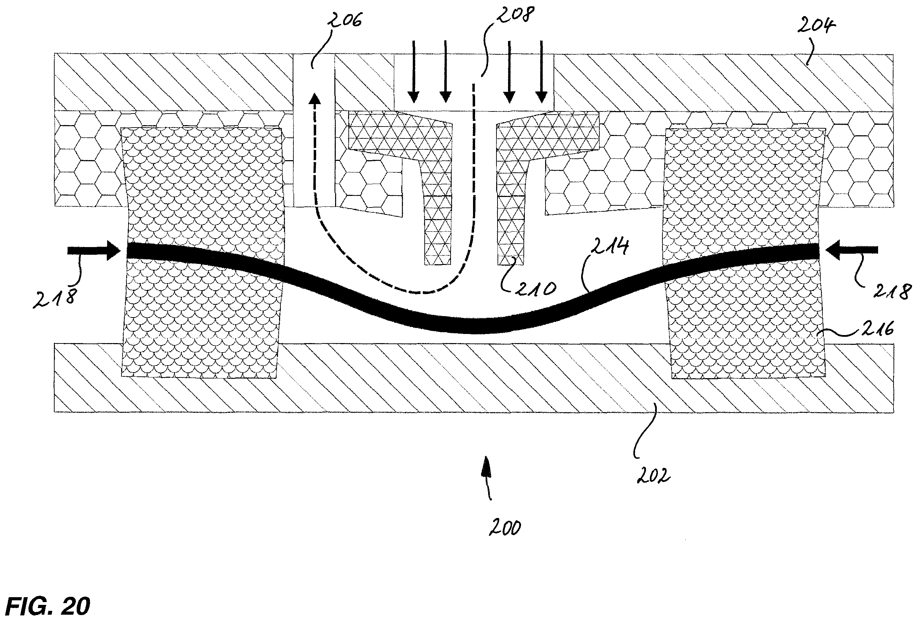

With an actuation as shown in Figure 20 the valve 200 can be opened. The actuation according to the present embodiment comprises buckling of the diaphragm 214 due to a radial force 218, for instance an applied pressure. As can be seen from Figure 20, the fixing means 216 is elastic and deflects under the radial force 218. The deflection of the valve seat 210 under applied pressure results in the same advantageous effect of a reduced gap and therefore is beneficial to close the valve 200.

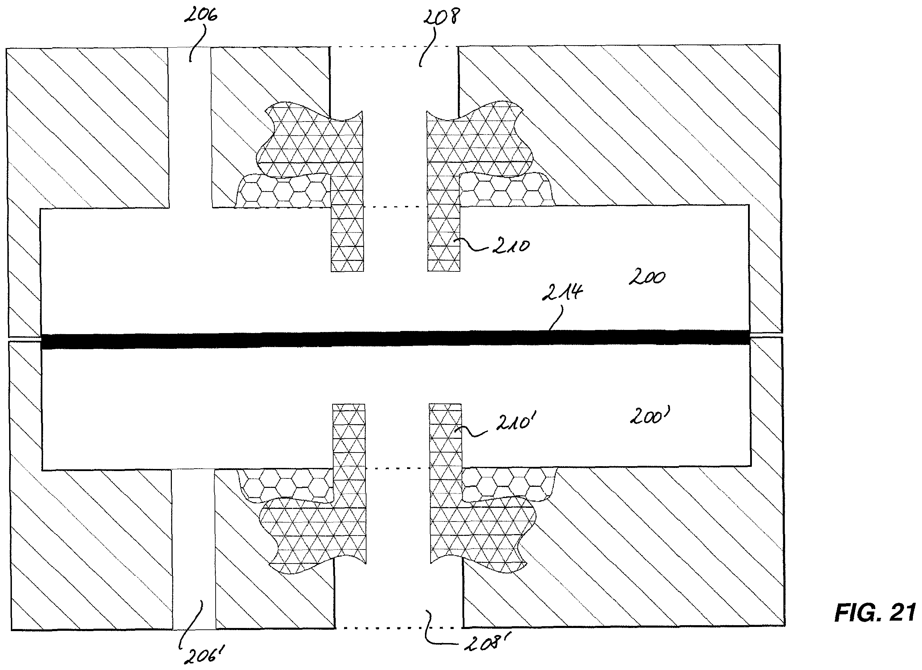

Fig. 21 shows a schematic sectional view of a valve assembly according to a further aspect of the present invention. According to this embodiment, the actuator 214 (normally referred to as a diaphragm) is sandwiched between two valves 200, 200' in order to form a so-called 2/3 way valve.

## Claims

1. Microvalve for a fluid pump, the microvalve comprising:
a body (10) having an opening (14)for being fluidically connected to a pump chamber (12),
a deflectable diaphragm (11),
a valve seat (15) which is arranged around said opening (14) and protrudes with an undeformed height from the opening (14) into the pump chamber (12) towards the deflectable diaphragm (11), so that the deflectable diaphragm (11) is operable to close and open the opening's fluidic pathway, respectively, by coming in contact with the valve seat (15) and getting away from it,
**characterized in that** the valve seat (15) comprises an elastic body (16) and a gasket (17) with sealing surface (18), and
wherein the valve seat (15) comprises at least one actuation region (34) for being actuated by an applied fluidic pressure directed from the opening towards the pump chamber (12).

2. Microvalve according to claim 1, wherein the valve seat (15) comprises an elastic mounting means (30) for attaching the valve seat (15) to the body (10).

3. Fluid pump for pumping a fluid from an inlet towards an outlet, the pump comprising:
a microvalve according to one of the claims 1 or 2,
a pump body (10) having at least a first opening (13) and a second opening (14),
wherein the deflectable diaphragm (11) is attached to the pump body (10) in such a way that a pump chamber (12) is formed between the pump body (10) and the diaphragm (11), and that said pump chamber (12) is fluid-connected to an inlet via said first opening (13) and to an outlet via said second opening (14),
wherein the valve seat (15) is arranged inside the pump chamber (12) around the second opening (14) and protrudes with an undeformed height from the second opening (14) into the pump chamber (12) towards the pump diaphragm (11), so that the deflectable diaphragm (11) is operable to close and open the outlet's fluidic pathway, respectively, by coming in contact with the valve seat (15) and getting away from it,
wherein said elastic body (16) of the valve seat (15) has an elasticity that its height is reduced by compression when the diaphragm (11) is deflected towards the pump body (10), and wherein the elastic body (16) of the valve seat (15) is operable to be stretched so that its height is increased when the diaphragm (11) is deflected away from the pump body (10), so that the single deflectable membrane is operable to provide a unidirectional flow between the inlet and the outlet.

4. Fluid pump according to claim 3, wherein said deflectable pump diaphragm (11) has a stiffness that is higher than the stiffness of said elastic body (16) of the valve seat (15), in such a way that the elastic body (16) does not hinder the movement of the pump diaphragm (11).

5. Fluid pump according to claim 3, wherein the elastic body (16) comprises a mounting flange attached to the pump body (10) around the second opening (14) and having a larger radial thickness than the radial thickness of the elastic body (16) has at a distal end that comes into contact with the deflectable diaphragm (11).

6. Fluid pump according to one of the claims 3 to 5, wherein the valve seat (15) comprises the elastic body (16) and a gasket (17) with the sealing surface (18), wherein the elastic body (16) and the gasket (17) are fabricated as separate parts.

7. Fluid pump according to one of the claims 3 to 6, wherein the valve seat (15) has a sealing region that is arranged to come into contact with the deflectable diaphragm (11) and a mounting region where it is attached to the pump body (10), and wherein an orifice (21) in the sealing region has a smaller diameter than a channel leading from the mounting region through the valve seat (15) toward the orifice (21).

8. Fluid pump according to one of the claims 3 to 7, wherein the valve seat (15) has a region with reduced wall thickness, and/or wherein the valve seat (15) has a bellows shaped region, having a U-profile or a V-profile, and/or wherein the valve seat (15) is mounted to be partly received within a first recess (29) that is formed at the second opening (14), the first recess (29) facing the pump chamber (12).

9. Fluid pump according to one of the claims 6 to 8, wherein said gasket (17) comprises a magnetic material, and wherein the fluid pump comprises an electromagnetic actuator (25; 27; 28) that is operable to elongate and/or compress the elastic body (16) by interacting with said magnetic material.

10. Fluid pump according to claim 9, wherein the pump body (10) comprises a ring-shaped second recess (26) arranged concentrically with the second opening (14), wherein the electromagnetic actuator (24, 25) is mounted within said ring-shaped second recess (26).

11. Fluid pump according to one of the claims 3 to 10, wherein the valve seat (15) comprises at least one actuation region for being actuated by an applied fluidic pressure directed from the opening towards the pump chamber (12).

12. Fluid pump according to claim 11, wherein the valve seat (15) comprises an elastic mounting means for attaching the valve seat (15) to the pump body (10).

13. Fluid pump system comprising a first fluid pump (100) according to one of the claims 3 to 12 and a second fluid pump (100') according to one of the claims 3 to 12, wherein the pump chamber (12) of the first fluid pump and the pump chamber (12') of the second fluid pump are separated from each other by a common deflectable pump diaphragm (11).

14. Method of operating a fluid pump according to one of the claims 3 to 12,
wherein the method comprises the following steps:
a) actuating the deflectable diaphragm (11) to move towards the valve seat (15) and to generate a pressure compressing the valve seat (15) until the deflectable diaphragm (11) comes into sealing contact with the sealing surface (18), and further actuating the deflectable diaphragm (11) to move until the valve seat (15) is further compressed so as to have a reduced height compared to said undeformed height,
b) actuating the deflectable diaphragm (11) to move away from the valve seat until the deflectable diaphragm loses contact with the sealing surface (18), wherein during this movement, the valve seat (15) is stretched so as to have elongated height compared to said undeformed height,
c) repeating steps a) and b) for pumping a fluid from the inlet towards the outlet wherein the single deflectable membrane provides a unidirectional flow between the inlet and the outlet.

15. Method according to claim 14, wherein the valve seat (15) comprises the elastic body (16) and a gasket (17) with the sealing surface (18), wherein said gasket (17) comprises a magnetic material, and wherein the fluid pump comprises an electromagnetic actuator (25; 27, 28) that is operated to elongate and/or compress the elastic body (16) by interacting with said magnetic material.

## Patentansprüche

1. Mikroventil für eine Fluidpumpe, wobei das Mikroventil umfasst:
einen Körper (10) mit einer Öffnung (14), um mit einer Pumpenkammer (12) fluidisch verbunden zu werden,
eine auslenkbare Membran (11),
einen Ventilsitz (15), der um die Öffnung (14) herum angeordnet ist und mit einer unverformten Höhe von der Öffnung (14) in die Pumpenkammer (12) in Richtung der auslenkbaren Membran (11) vorsteht, so dass die auslenkbare Membran (11) betätigt werden kann, um den Fluidweg der Öffnung jeweils zu schließen und zu öffnen, indem sie mit dem Ventilsitz (15) in Kontakt kommt und sich von diesem entfernt,
**dadurch gekennzeichnet, dass** der Ventilsitz (15) einen elastischen Körper (16) und eine Dichtung (17) mit Dichtfläche (18) umfasst, und
wobei der Ventilsitz (15) wenigstens einen Betätigungsbereich (34) umfasst, um durch einen von der Öffnung in Richtung der Pumpenkammer (12) ausgeübten Fluiddruck betätigt wird.

2. Mikroventil nach Anspruch 1, wobei der Ventilsitz (15) ein elastisches Montagemittel (30) zum Befestigen des Ventilsitzes (15) am Körper (10) umfasst.

3. Fluidpumpe zum Pumpen eines Fluids von einem Eingang zu einem Ausgang, wobei die Pumpe umfasst:
ein Mikroventil nach einem der Ansprüche 1 oder 2,
einen Pumpenkörper (10) mit wenigstens einer ersten Öffnung (13) und einer zweiten Öffnung (14),
wobei die auslenkbare Membran (11) am Pumpenkörper (10) so befestigt ist, dass eine Pumpenkammer (12) zwischen dem Pumpenkörper (10) und der Membran (11) gebildet wird und dass die Pumpenkammer (12) über die erste Öffnung (13) mit einem Eingang und über die zweite Öffnung (14) mit einem Ausgang in Fluidverbindung steht,
wobei der Ventilsitz (15) in der Pumpenkammer (12) um die zweite Öffnung (14) herum angeordnet ist und mit einer unverformten Höhe von der zweiten Öffnung (14) in die Pumpenkammer (12) in Richtung der Pumpenmembran (11) vorsteht, so dass die auslenkbare Membran (11) betätigt werden kann, um den Fluidweg des Ausgangs jeweils zu schließen und zu öffnen, indem sie mit dem Ventilsitz (15) in Kontakt kommt und sich von diesem entfernt,
wobei der elastische Körper (16) des Ventilsitzes (15) eine solche Elastizität aufweist, dass seine Höhe durch Kompression verringert wird, wenn die Membran (11) zum Pumpenkörper (10) hin ausgelenkt wird, und wobei der elastische Körper (16) des Ventilsitzes (15) betätigbar ist, um gedehnt zu werden, so dass seine Höhe vergrößert wird, wenn die Membran (11) vom Pumpenkörper (10) weg ausgelenkt wird, so dass die einzelne auslenkbare Membran betätigbar ist, um eine unidirektionale Strömung zwischen dem Eingang und dem Ausgang bereitzustellen.

4. Fluidpumpe nach Anspruch 3, wobei die auslenkbare Pumpenmembran (11) eine Steifigkeit aufweist, die höher ist als die Steifigkeit des elastischen Körpers (16) des Ventilsitzes (15), so dass der elastische Körper (16) die Bewegung der Pumpenmembran (11) nicht behindert.

5. Fluidpumpe nach Anspruch 3, wobei der elastische Körper (16) einen Montageflansch umfasst, der um die zweite Öffnung (14) herum am Pumpenkörper (10) befestigt ist und an einem distalen Ende, das mit der auslenkbaren Membran (11) in Kontakt kommt, eine größere radiale Dicke aufweist als die radiale Dicke des elastischen Körpers (16).

6. Fluidpumpe nach einem der Ansprüche 3 bis 5, wobei der Ventilsitz (15) den elastischen Körper (16) und eine Dichtung (17) mit der Dichtfläche (18) umfasst, wobei der elastische Körper (16) und die Dichtung (17) als separate Teile gefertigt sind.

7. Fluidpumpe nach einem der Ansprüche 3 bis 6, wobei der Ventilsitz (15) einen Dichtbereich, der angeordnet ist, mit der auslenkbaren Membran (11) in Kontakt zu kommen, und einen Montagebereich aufweist, in dem er am Pumpenkörper (10) befestigt ist, und wobei eine Öffnung (21) im Dichtbereich einen kleineren Durchmesser aufweist als ein vom Montagebereich durch den Ventilsitz (15) zur Öffnung (21) führender Kanal.

8. Fluidpumpe nach einem der Ansprüche 3 bis 7, wobei der Ventilsitz (15) einen Bereich mit verringerter Wanddicke aufweist und/oder wobei der Ventilsitz (15) einen balgenförmigen Bereich mit einem U-Profil oder einem V-Profil aufweist und/oder wobei der Ventilsitz (15) zur teilweisen Aufnahme in einer ersten Aussparung (29) montiert ist, die an der zweiten Öffnung (14) gebildet ist, wobei die erste Aussparung (29) zur Pumpenkammer (12) zeigt.

9. Fluidpumpe nach einem der Ansprüche 6 bis 8, wobei die Dichtung (17) ein magnetisches Material umfasst und wobei die Fluidpumpe ein elektromagnetisches Stellglied (25; 27; 28) umfasst, das betätigbar ist, um den elastischen Körper (16) durch Wechselwirkung mit dem magnetischen Material zu verlängern und/oder zu komprimieren.

10. Fluidpumpe nach Anspruch 9, wobei der Pumpenkörper (10) eine ringförmige zweite Aussparung (26) umfasst, die konzentrisch mit der zweiten Öffnung (14) angeordnet ist, wobei das elektromagnetische Stellglied (24, 25) innerhalb der ringförmigen zweiten Aussparung (26) montiert ist.

11. Fluidpumpe nach einem der Ansprüche 3 bis 10, wobei der Ventilsitz (15) wenigstens einen Betätigungsbereich umfasst, der durch einen von der Öffnung in Richtung Pumpenkammer (12) ausgeübten Fluiddruck betätigt wird.

12. Fluidpumpe nach Anspruch 11, wobei der Ventilsitz (15) ein elastisches Montagemittel zum Befestigen des Ventilsitzes (15) am Pumpenkörper (10) umfasst.

13. Fluidpumpensystem, umfassend eine erste Fluidpumpe (100) nach einem der Ansprüche 3 bis 12 und eine zweite Fluidpumpe (100') nach einem der Ansprüche 3 bis 12, wobei die Pumpenkammer (12) der ersten Fluidpumpe und die Pumpenkammer (12') der zweiten Fluidpumpe durch eine gemeinsame auslenkbare Membran (11) voneinander getrennt sind.

14. Verfahren zum Betreiben einer Fluidpumpe nach einem der Ansprüche 3 bis 12,
wobei das Verfahren die folgenden Schritte umfasst:
a) Betätigen der auslenkbaren Membran (11), um sie in Richtung des Ventilsitzes (15) zu bewegen und einen Druck zu erzeugen, der den Ventilsitz (15) komprimiert, bis die auslenkbare Membran (11) in dichtenden Kontakt mit der Dichtfläche (18) kommt, und ferner Betätigen der auslenkbaren Membran (11), um sie zu bewegen, bis der Ventilsitz (15) weiter komprimiert wird, so dass er eine verringerte Höhe im Vergleich zur unverformten Höhe aufweist,
b) Betätigen der auslenkbaren Membran (11), um sich vom Ventilsitz weg zu bewegen, bis die auslenkbare Membran den Kontakt mit der Dichtfläche (18) verliert, wobei während dieser Bewegung der Ventilsitz (15) so gedehnt wird, dass er eine längere Höhe im Vergleich zur unverformten Höhe aufweist,
c) Wiederholen der Schritte a) und b) zum Pumpen eines Fluids vom Eingang zum Ausgang, wobei die einzelne auslenkbare Membran eine unidirektionale Strömung zwischen dem Eingang und dem Ausgang erzeugt.

15. Verfahren nach Anspruch 14, wobei der Ventilsitz (15) den elastischen Körper (16) und eine Dichtung (17) mit der Dichtfläche (18) umfasst, wobei die Dichtung (17) ein magnetisches Material umfasst und wobei die Fluidpumpe ein elektromagnetisches Stellglied (25; 27, 28) umfasst, das betätigt wird, um den elastischen Körper (16) durch Wechselwirkung mit dem magnetischen Material zu verlängern und/oder zu komprimieren.

## Revendications

1. Microvanne pour une pompe à fluide, la microvanne comprenant :
un corps (10) ayant une ouverture (14) destinée à être connectée fluidiquement à une chambre de pompe (12), une membrane déflectable (11),
un siège de soupape (15) qui est agencé autour de ladite ouverture (14) et qui fait saillie avec une hauteur non déformée de l'ouverture (14) dans la chambre de pompe (12) vers la membrane déflectable (11), de sorte que la membrane déflectable (11) puisse fermer et ouvrir la voie fluidique de l'ouverture, respectivement, en entrant en contact avec le siège de soupape (15) et en s'en éloignant,
**caractérisé en ce que** le siège de soupape (15) comprend un corps élastique (16) et un joint (17) avec une surface d'étanchéité (18), et
dans laquelle le siège de soupape (15) comprend au moins une région d'actionnement (34) destinée à être actionnée par une pression fluidique appliquée dirigée de l'ouverture vers la chambre de pompe (12).

2. Microvanne selon la revendication 1, dans laquelle le siège de soupape (15) comprend un moyen de montage élastique (30) pour fixer le siège de soupape (15) au corps (10).

3. Pompe à fluide pour pomper un fluide d'une entrée vers une sortie, la pompe comprenant :
une microvanne selon l'une des revendications 1 ou 2,
un corps de pompe (10) ayant au moins une première ouverture (13) et une deuxième ouverture (14),
dans laquelle la membrane déflectable (11) est fixée au corps de pompe (10) de manière qu'une chambre de pompe (12) est formée entre le corps de pompe (10) et la membrane (11), et que ladite chambre de pompe (12) est connectée fluidiquement à une entrée *via* ladite première ouverture (13) et à une sortie *via* ladite deuxième ouverture (14),
dans laquelle le siège de soupape (15) est agencé à l'intérieur de la chambre de pompe (12) autour de la deuxième ouverture (14) et fait saillie avec une hauteur non déformée à partir de la deuxième ouverture (14) dans la chambre de pompe (12) vers la membrane de pompe (11), de sorte que la membrane déflectable (11) puisse fermer et ouvrir la voie fluidique de l'ouverture, respectivement, en entrant en contact avec le siège de soupape (15) et en s'en éloignant,
dans laquelle ledit corps élastique (16) du siège de soupape (15) a une élasticité telle que sa hauteur est réduite par compression lorsque la membrane (11) est déviée vers le corps de pompe (10), et dans laquelle le corps élastique (16) du siège de soupape (15) peut être étiré de sorte que sa hauteur augmente lorsque la membrane (11) est déviée loin du corps de pompe (10), de sorte que la membrane déflectable unique déviée est prévue pour fournir un flux unidirectionnel entre l'entrée et la sortie.

4. Pompe à fluide selon la revendication 3, dans laquelle ladite membrane déflectable de pompe (11) a une rigidité supérieure à la rigidité dudit corps élastique (16) du siège de soupape (15), de manière que le corps élastique (16) n'entrave pas le mouvement de la membrane de pompe (11).

5. Pompe à fluide selon la revendication 3, dans laquelle le corps élastique (16) comprend une bride de montage fixée au corps de pompe (10) autour de la deuxième ouverture (14) et ayant une épaisseur radiale supérieure à l'épaisseur radiale du corps élastique (16) a une extrémité distale qui entre en contact avec la membrane déflectable (11).

6. Pompe à fluide selon l'une des revendications 3 à 5, dans laquelle le siège de soupape (15) comprend le corps élastique (16) et un joint (17) avec la surface d'étanchéité (18), dans laquelle le corps élastique (16) et le joint (17) étant fabriqués en tant que pièces séparées.

7. Pompe à fluide selon l'une des revendications 3 à 6, dans laquelle le siège de soupape (15) a une région d'étanchéité qui est agencée pour entrer en contact avec la membrane déflectable (11) et une région de montage où il est fixé au corps de pompe (10), et dans laquelle un orifice (21) dans la région d'étanchéité a un diamètre plus petit qu'un canal menant de la région de montage à travers le siège de soupape (15) vers l'orifice (21).

8. Pompe à fluide selon l'une des revendications 3 à 7, dans laquelle le siège de soupape (15) a une région avec une épaisseur de paroi réduite, et/ou dans laquelle le siège de soupape (15) a une région en forme de soufflet, ayant un profil en U ou un profil en V, et/ou dans laquelle le siège de soupape (15) est monté pour être partiellement reçu dans un premier renfoncement (29) qui est formé au niveau de la deuxième ouverture (14), le premier renfoncement (29) faisant face à la chambre de pompe (12).

9. Pompe à fluide selon l'une des revendications 6 à 8, dans laquelle ledit joint (17) comprend un matériau magnétique, et dans laquelle la pompe à fluide comprend un actionneur électromagnétique (25 ; 27 ; 28) qui peut allonger et/ou comprimer le corps élastique (16) en interagissant avec ledit matériau magnétique.

10. Pompe à fluide selon la revendication 9, dans laquelle le corps de pompe (10) comprend un deuxième renfoncement (26) en forme d'anneau, agencé concentriquement avec la deuxième ouverture (14), dans laquelle l'actionneur électromagnétique (24, 25) est monté à l'intérieur dudit deuxième renfoncement (26) en forme d'anneau.

11. Pompe à fluide selon l'une des revendications 3 à 10, dans laquelle le siège de soupape (15) comprend au moins une région d'actionnement destinée à être actionnée par une pression fluidique appliquée dirigée depuis l'ouverture vers la chambre de pompe (12).

12. Pompe à fluide selon la revendication 11, dans laquelle le siège de soupape (15) comprend un moyen de montage élastique pour fixer le siège de soupape (15) au corps de pompe (10).

13. Système de pompe à fluide comprenant une première pompe à fluide (100) selon l'une des revendications 3 à 12 et une deuxième pompe à fluide (100') selon l'une des revendications 3 à 12, dans lequel la chambre de pompe (12) de la première pompe à fluide et la chambre de pompe (12') de la deuxième pompe à fluide sont séparées l'une de l'autre par une membrane déflectable de pompe (11) commune.

14. Procédé de fonctionnement d'une pompe à fluide selon l'une des revendications 3 à 12,
dans lequel le procédé comprend les étapes suivantes :
a) actionner la membrane déflectable (11) pour qu'elle se déplace vers le siège de soupape (15) et pour générer une pression comprimant le siège de soupape (15) jusqu'à ce que la membrane déflectable (11) vienne en contact étanche avec la surface d'étanchéité (18), et actionner encore la membrane déflectable (11) pour qu'elle se déplace jusqu'à ce que le siège de soupape (15) soit encore comprimé de manière à avoir une hauteur réduite par rapport à ladite hauteur non déformée,
b) actionner la membrane déflectable (11) pour l'éloigner du siège de soupape jusqu'à ce que la membrane déflectable perde le contact avec la surface d'étanchéité (18), dans lequel pendant ce mouvement, le siège de soupape (15) est étiré de manière à avoir une hauteur allongée par rapport à ladite hauteur non déformée,
c) répéter les étapes a) et b) pour pomper un fluide de l'entrée vers la sortie, dans lequel la membrane déflectable unique prévoit un flux unidirectionnel entre l'entrée et la sortie.

15. Procédé selon la revendication 14, dans lequel le siège de soupape (15) comprend le corps élastique (16) et un joint (17) avec la surface d'étanchéité (18), dans lequel ledit joint (17) comprend un matériau magnétique, et dans lequel la pompe à fluide comprend un actionneur électromagnétique (25 ; 27 ; 28) qui est actionné pour allonger et/ou comprimer le corps élastique (16) en interagissant avec ledit matériau magnétique.
